# EUROPEAN PATENT SPECIFICATION

(11) **EP 2 218 060 B1**
(45) Date of publication and mention of the grant of the patent: **11.03.2015**
(21) Application number: 08847700.5
(22) Date of filing: 07.11.2008
(51) Int. Cl.: G08B 25/01, G08B 25/08, H04M 11/00, H04M 11/04

(54) **ALARM DEVICE FOR THE PROTECTION OF PROPERTY**
ALARMVORRICHTUNG ZUM EIGENTUMSSCHUTZ
DISPOSITIF D'ALARME ANTI-INTRUSION

(30) Priority: 09.11.2007 GB 0722037
(43) Date of publication of application: 18.08.2010
(73) Proprietor: Mobile Angel World Ltd, Wimbledon London SW19 7LH (GB)
(72) Inventor: JESSIMAN, Gordon, London SW19 7LH (GB); BURGUM, Frank, London SW16 5JQ (GB)
(74) Representative: Crouch, David John
(86) International application number: PCT/GB2008/003753
(87) International publication number: WO 2009/060204

(56) References cited:
- EP-A- 1 335 337
- WO-A-2006/065238
- WO-A1-02/089085
- GB-A- 2 384 604
- GB-A- 2 419 995
- US-A1- 2004 119 591
- US-A1- 2007 091 177

## Description

The present invention relates to an alarm device comprising a control processor connected to at least one input sensor such that when the input sensor is triggered, it sends a signal to the control processor.

GB 2384604 discloses a unit allowing remote monitoring of an area via the use of a mobile network SMS system. The unit can be added to an external alarm system or may be used on its own. The unit is triggered by the external alarm system or by one of the internal sensors which include a piezo electric sensor, a panic button, a temperature sensor and a flood water detector. Once triggered an SMS text message containing the location and the cause of the alarm may be sent to one or more mobile phone numbers. The unit can be secured by a four digit alphanumeric number and can be controlled and provide status information remotely. Four auxiliary outputs are provided on the unit for switching external devices.

WO 2006/065238 discloses a method of asset location. Location data is received from a cellular transmitter associated with a selected asset, which location data includes data representative of a cellular receiver with which direct communication with the cellular transmitter is made. The location data is then communicated to a tracking service system, which tracking service system includes a database representative of geographic locations associated with a plurality of cellular location data so as to generate geographic tracking data associated with a location of the cellular receiver, the geographic tracking data including display data adapted to generate a map image including a representative of a location of the selected asset. The geographic tracking data is then communicated to an associated security agency so as to allow for viewing of an image generated in accordance with the display data and at least one of tracking and interception of the selected asset.

GB 2419995 discloses a method for tracking a vehicle wherein a control unit in the vehicle has an intrusion detector which generates an intrusion notification when unauthorised access to, or tampering with, the vehicle is detected. Location detection means, such as GPS, determine the location of the vehicle. A transmitter, such as a mobile phone transmitter, is connected to the intrusion detector. A receiving terminal is configured to receive an intrusion notification and location for the vehicle from the transmitter and display the location graphically. The receiving terminal could be a mobile phone, or a computer connected to the internet. The location can be displayed on a map. The map may be downloaded from a separate mapping server and displayed in response to the user clicking on a link, such as a URL.

Presently, alarm devices for use in protecting property, especially vehicles and houses, when activated emit audible alarms, often in the form of a siren or ringing tone, which may or may not be heard by the owner and can cause a noise nuisance. A problem encountered by such devices is that the audible alarm is often ignored by persons other than the owner. Furthermore, such alarm systems require fitting to the property by experts, which requires hardwiring the device into the electronics of the vehicle or property, which can be expensive and means the alarm device can only be used for a single purpose.

Both wired and wireless systems that are presently used for protecting vehicles and property are not portable, in that they cannot be easily be transferred from one item of property or vehicle to another, and all require some form of installation.

Current vehicle alarm systems fitted in a vehicle may notify a monitoring service that the alarm has been activated. The monitoring service may then notify the owner of the vehicle and/or the police. However, this service is costly and may result in a delay in notifying the owner and/or the police, during which the vehicle can have travelled a long distance.

The present invention seeks to obviate one or more of these disadvantages.

Accordingly, the present invention is directed to an alarm device according to claim 1.

A sealed casing makes it especially difficult for the device to be tampered with. Furthermore, it allows the device to be portable and can be transferred to different vehicles or other property to be protected.

Advantageously, the cellular modem is connected to a Subscriber Identification Module (SIM). This allows connection to a mobile telephone network through which contact can be made between the alarm device and a user's mobile telephone.

Preferably, the device is armable and disarmable by means of a short message service (SMS) message from a mobile phone. Thus, the device can be armed or disarmed remotely by means of an SMS message, also known as a 'text message', sent from the user's mobile telephone.

In a preferred embodiment, the control processor can be programmed by means of programming instructions received in the form of an SMS message through the cellular modem from a mobile phone. Therefore, the alarm device settings may be adjusted by means of an SMS message, for instance changing the sensitivity of the alarm device or switching between a number of input sensors contained within the alarm device to set which are active.

Preferably, upon completing the instructions contained within the received SMS, an SMS is sent back to the mobile telephone to confirm the instructions have been carried out. This enables the user to be sure that the arming, disarming or programming of the device has occurred.

In one possible form, the device further comprises a GPS receiver connected to the control processor such that when an SMS message request is received via cellular modem, the location of the device can be transmitted via the cellular modem. Therefore, when the users requests the position of the alarm device via SMS, the device can text the user its location in the form of GPS co-ordinates. The location of a vehicle in which the alarm device is located can be determined by the user sending an SMS to the device requesting the GPS co-ordinates.

In a further embodiment, the alarm device comprises a General Packet Radio Service (GPRS) connection such that the alarm device can send information regarding its GPS position directly to a computer terminal.

Favourably, subsequent to receiving the location request by SMS message, the location of the device is transmitted at regular intervals. The request for the location of the device can be made by sending a single text and the location then sent at regular intervals, those intervals being either set by the user or being pre-programmed. The location of the vehicle can then be tracked as it moves.

Advantageously, the device further comprises a short-range wireless interface, such as a Bluetooth^{®} device, connected to the control processor to forward signals it receives to the control processor and transmit signals received from the control processor. This allows for reception of signals from slave devices such as a slave sensor or transmission of signals to slave equipment such as security lighting.

Preferably, the short-range wireless interface transmits a signal to activate or control a secondary device. The short-range wireless interface can be used, for example, to turn on security lights when the input sensor is triggered or following an SMS message being received by the device to instruct such an event to occur.

Preferably, the said at least one input sensor is selected from any one of:
a short-range wireless interface;
a motion sensor;
a tilt sensor;
a passive infrared sensor;
a laser;
an ultrasound sensor;
a temperature sensor;
a light sensor;
a sound sensor;
a pressure sensor; and
a water sensor.

The above list is not exhaustive and other types of sensor not listed may be provided.

Preferably, the said at least one input sensor is a pressure sensor which comprises a panic button. The alarm can therefore be used as a panic alarm upon triggering of which an SMS message is sent to a predetermined mobile telephone number.

In a preferred embodiment, the device further comprises conductance coils for charging a battery of the device. Conductance coils remove the need for a battery to be recharged by means of a wire. The device can be placed next to corresponding coils and charged by induction.

The device may be capable of making a voice call to the mobile telephone. This allows the user to hear what is happening around the alarm device and, if the alarm device is fitted with a speaker and microphone, allow two-way communication. The voice call may comprise a pre-recorded message, which is relayed by the mobile alarm device upon being triggered.

The present invention is intended to be portable and self-contained, requiring no expert installation. It is intended to notify the user of any unauthorised attempt to gain entry to a protected vehicle, any intrusion on property that is protected by the device, or any activation by a person carrying the device.

An example of an alarm device made in accordance with the present invention will now be described with reference to the accompanying drawings, in which:
Figure 1 shows a block diagram of an alarm device which, apart from a socket, embodies the present invention;
Figure 2 shows a block diagram of state transitions of the device; and
Figure 3 shows a diagram of the alarm system.

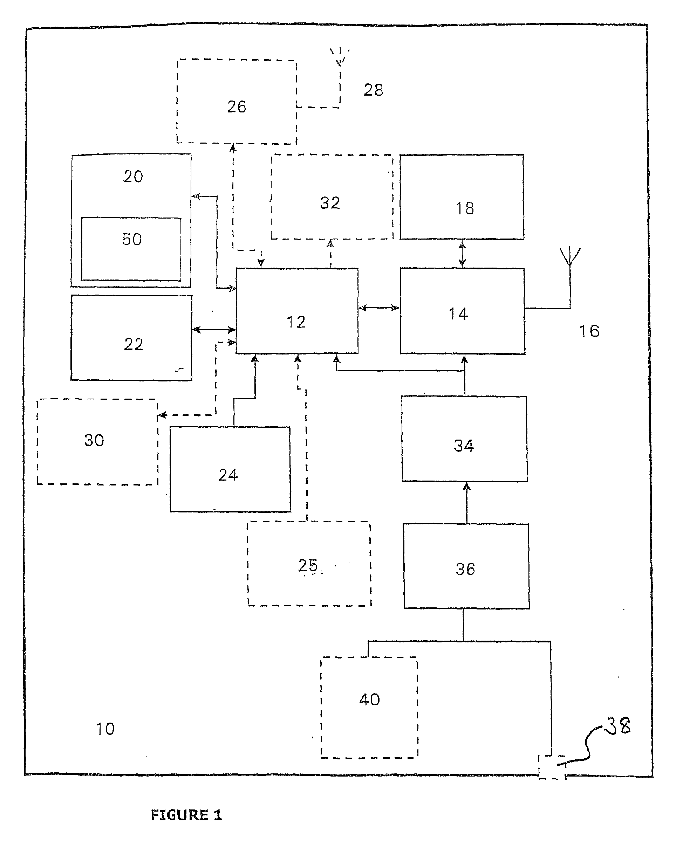

Figure 1 shows an alarm device 10 comprising a central processor 12 to which is connected a cellular modem 14. The cellular modem 14 is connected to a cellular antenna 16 and a subscriber identification module 18, also known as a SIM card.

Non-volatile memory 20 and data memory 22 are both connected to the central processor. Non-volatile memory 20 is memory that retains and stores the information contained within it when the power supply is removed, including a control program 50, and the data memory 22 is volatile memory, from which the contents are lost upon removal or complete discharging of the power source.

Further connected to the central processor 12 are an input sensor 24, additional input sensors 25, a global positioning system (GPS) receiver 26, and corresponding antenna 28, a short-range wireless interface 30, and a status light 32.

A storage battery 34 is provided to supply power to the central processor 12 and the cellular modem 14. The battery 34 is connected to a battery charging controller 36, which is in turn connected to a charging socket 38, to which a mains supply may be attached, and an inductive charge circuit 40, for charging the device by way of inductive coils (not shown).

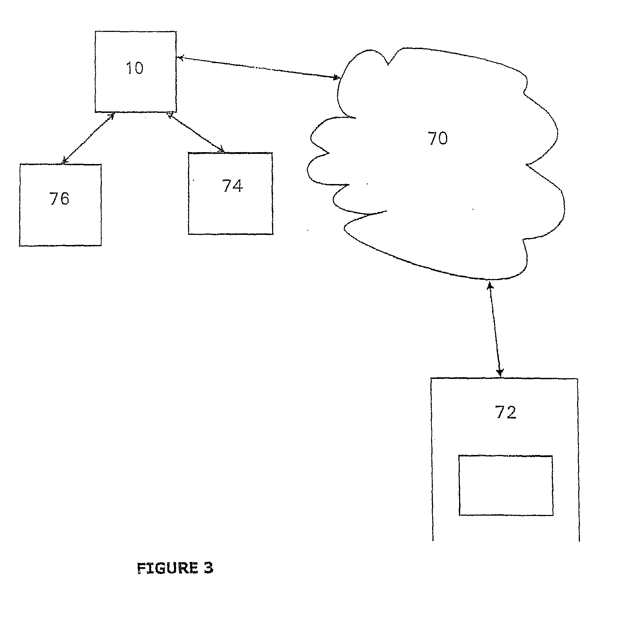

The SIM card 18 authorises the cellular modem 14 to access a cellular network 70, shown in Figure 3, via the cellular antenna 16. The cellular modem 14 is therefore able to send and receive information, in the form of SMS messages and/or data calls, over the cellular network 70, to and from the central processor.

When the device is turned on, the central processor 12 runs the control program 50. The central processor 12 may use the data memory 22 during operation of the control program 50. SMS messages received via the cellular modem 14 are forwarded to the control processor 12 to be validated and decoded in accordance with the control program 50. Such messages may contain information used to modify the settings of the device 10, instruct the device to perform certain actions, or to modify the internal state of the device 10. The validation involves confirming that the mobile telephone 72 from which the SMS message has been received corresponds to the details held within the non-volatile memory, for example by confirming the telephone number of the mobile telephone 72 corresponds to that stored in the memory.

Messages, either predetermined or in accordance with templates from the memory, can be generated by the control processor 12 and transmitted via the cellular modem 14. The templates may, for example, acquire data from the device 10 and insert the data in the relevant position in the message template, for example the GPS position. The destination of the messages sent from the device 10 is preset in the non-volatile memory.

Upon receiving a validated SMS message from the mobile phone 72, central processor 12 carries out the instructions contained therein, and, upon completing those instructions, transmits a confirmation SMS message to inform the user that the operation has been completed. Clearly where the received SMS instructs the device 10 to transmit a message back to the mobile telephone 72 already, it is not necessary for a further confirmation message to be sent.

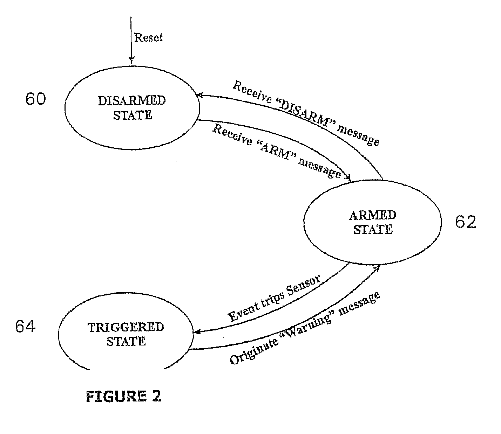

Figure 2 shows the device 10, upon powering up or resetting, enters a disarmed state 60, which is to say that even if the input sensor is triggered, the device will not activate. The device may be transferred into an armed state 62, that is to say that if the input sensor is triggered the alarm is activated, upon receipt of an SMS message received via the cellular modem 14, provided the SMS message matches the pre-determined criteria. For example, the SMS may contain the string "arm", which the central processor 12, using the control program 50, recognises as an instruction to enter an armed state and acts accordingly. Such an 'arm' message should also indicate which of the several sensors 24 and 25 to respond to in the event that they are triggered.

As shown in Figures 2 and 3, when the input sensor 24 is triggered, the device enters a triggered state 64 and the central processor 12 sends an SMS message to a pre-programmed mobile telephone number as dictated by the control program 20, alerting the mobile telephone 72 to the input sensor 24 having been triggered. When more than one input sensor 24 and 25 is used, the SMS message sent to the mobile telephone 72 may indicate which sensor 24 and 25 was triggered. Upon transmitting an alerting SMS message to the mobile telephone 72, the device transfers from a triggered state 64 to an armed state.

The alarm device 10 may be transferred from an armed state 62 to a disarmed state 60 by way of an SMS message, for example including the string "disarm" being received from the mobile telephone 72.

On receipt of an SMS message requesting the GPS location of the device 10, the central processor 12 acquires the co-ordinates from the GPS receiver 26, inserts the co-ordinates into an SMS template and transmits them via cellular modem 14.

Figure 3 shows the use of the alarm device 10 in a system comprising a slave sensor 74 and a slave device 76. The slave sensor 74 may, by way of an example, be in the form of a pressure sensor connected to a short-range wireless interface from which signals are transmitted and received by the input sensor 24 and 25 of the alarm device 10. The slave device 76 may, by way of an example, be in the form of security lighting comprising a short-range wireless interface, which receives signals from the short-range wireless interface 30 of the device 10.

The storage battery 34 of the alarm device 10 is charged by either connection to the mains by the charging socket 38, or by positioning the device 10 with the induction charge circuit 40 next to the winding of a transformer (not shown) to allow for inductive loop coupling charging of the battery. In an alarm device 10 which embodies the present invention, however, the charging socket 38 is absent.

The status light 32 is used to indicate the status of the alarm device 10. It is activated when the device 10 is armed and also indicates when the device 10 is triggered.

The alarm device 10 incorporates current mobile telephone technology and the logic in the telephone module enables initialising a Global System for Mobile communications (GSM) module contained within the alarm device 10, receiving and decoding SMS messages from the GSM module, controlling storage of the internal state variables in the non-volatile memory 20, including controlling of charging and monitoring the battery charge state, controlling low power 'sleep' modes, generating of SMS messages in the case of the alarm device 10 being triggered, and in response to or acknowledgement of status requests received from the mobile telephone 72.

Although the basic communication protocol between the user's mobile telephone 72 and the alarm device 10 is SMS messaging, an application program running on the mobile telephone 72 can be use to set profiles and quickly arm, disarm and monitor the alarm device 10. Thus, instead of having to type an SMS messages in order to arm, disarm or send instructions to the alarm device 10, the application can have set profiles that automatically send the necessary information in the form of an SMS to the mobile alarm. By way of an example, the user can select a 'motion sound arm' profile, which would arm the device 10 to be triggered by either a motion input sensor 24 or a sound input sensor 25.

An alarm device 10 in accordance with the present invention is hermetically sealed and therefore is not provided with a charging socket 38. The charging method in such a situation will be induction charging via the induction charge circuit 40.

The status of the device 10, for example the battery level or the strength of the signal of the cellular network 70, can be requested by sending an SMS message from the mobile telephone 72. The control processor 12 then transmits the relevant information back to the mobile telephone 72 in the form of an SMS message.

The alarm device 10 may be used to protect any vehicles, for example, cars, vans, lorries, quad bikes, bicycles, tractors, or buses. It may be placed anywhere inside or on the vehicle, for instance, in the glove compartment of a motorised vehicle, on a shelf of the vehicle underneath a seat or clipped to the air vent or frame of a vehicle. The device 10 may also be used in boats, caravans or mobile homes.

The alarm device 10 may be used to protect property, for example homes, sheds, garages or out-buildings, and may be used to protect the area in which it is positioned itself or other areas via slave sensors 74. The input sensor 24 or 25 may comprise a light sensor, which receives a beam of light from an external source, such as infrared or a laser, which, upon the source being interrupted, is triggered.

The alarm device 10 may be used to track the movements of a pet via the GPS device 26 by attaching the alarm device 10 to the pet's collar.

The alarm device 10 may use the short-range wireless interface 30 to control and/or monitor an in-building network of security sensors, so that a unified building protection alarm system can be controlled and/or monitored remotely from a user's mobile telephone 72.

Numerous variations and modifications to the illustrated constructions may occur to the reader familiar with the art without taking the device outside the scope of the present invention. For example, the device may be set so that if it is taken outside a specific set of GPS co-ordinates, the device will send an SMS message to a mobile telephone. Furthermore, the alarm device may be programmable via the short-range wireless interface or via a USB connection between the alarm device and a computer terminal, in addition to or instead of SMS messages. Additionally, the alarm device may comprise a camera or video camera, which can be accessed by the user's mobile telephone by way of a Multimedia Messaging Service (MMS) message or a video call respectively.

As a further example, the alarm device could be used to protect any type of luggage such as suitcases, bags or briefcases. This may be achieved by programming the alarm device via a short-range wireless interface, for example of a mobile telephone such that if the luggage moves out of the range of the mobile telephone short-range wireless interface, for example 10 metres from the mobile telephone, an SMS message is automatically sent to the user's mobile telephone stating "luggage out of range". Alternatively, a profile in the alarm device may be set to automatically transmit the GPS co-ordinates of the alarm device upon moving beyond the range of the mobile telephone short-range wireless transmitter. Alternatively the device may be interrogated as to its GPS co-ordinates, whereupon it will forward this information to the mobile telephone of the owner. That telephone may include software and a database to interpret the co-ordinates in terms of a position on a map shown on its screen.

Whilst the alarm device has been described in relation to receiving and sending SMS messages from and to a mobile telephone, a landline could also be used in place of a mobile telephone.

Thus, a product made in accordance with the present invention may comprise a box, which may be black, with no buttons but with two-way communications.

An alarm device according to the present invention relates to a small, portable, self-powered alarm device with no external user interface, in which a control processor is connected to one or more sensors so that when a sensor is triggered the control processor can transmit the alarm condition to a mobile phone by means of a cellular modem. The control processor can also receive commands from a mobile phone by means of the cellular modem, among such commands being one which arms the security device and at the same time selects one of a number of pre-defined profiles governing which one or more of the attached sensors are activated according to the type of area or possessions which it is intended to protect.

In a further aspect, the invention is directed to a small portable, self-contained security device, with no external user interface, with two-way communication, via which the device can be programmed and controlled remotely and via which an alarm condition can be transmitted.

The security device may hold different profiles to give the user the option of selecting a profile in accordance with the areas or possessions they wish to protect.

Such a device may be in the form of a mobile alarm, and may comprise a security alarm system that is multifunctional, portable and allows the user to communicate with the alarm via a mobile phone, and the alarm to communicate back.

Previous proposals for protection of vehicles comprise fixed wired or wireless alarm systems, some of which do work in conjunction with mobile phones or land lines. However none of these are portable; they all require some form of installation. Another problem with existing alarms is that they often sound a ringing tone which may or may not be heard by the owner and causes noise pollution.

The mobile alarm of the present invention is made without buttons and may be without exterior markings, allowing it to go unnoticed (if wished) by the thief or burglar, unlike a lot of alarms which are easily detectable to a potential criminal, therefore leaving it possible for them to disable/disconnect the alarm. The mobile alarm may be used as a deterrent if the user wishes; however it may also be hidden to prevent the criminal disabling the device.

It may be triggered automatically when an unauthorized attempt is made to gain entry into a vehicle. The mobile alarm may in this case send a preset text message to the mobile phone informing the user that the alarm has been triggered. It may be battery operated. It does not need any physical user interface and can make use of a variety of different sensor types. It may incorporate a GPS function which enables tracking after theft.

The mobile alarm may use two types of sensors. One is a movement tilt sensor. The other is a glass breaking sensor. There are a number of ways to break into a vehicle. One might smash the glass, open the door with a stolen or copied key, pick the lock or lift the car (onto the back of a truck or tow it away). The two sensors used in the alarm would cover 90% of break-ins to a vehicle.

Other sensors may be added to the mobile alarm, such as an infra red or a laser sensor making it possible to protect indoor spaces, such as a hotel room, a bedsit, flats, houses, sheds and garages.

The alarm may have applications in vehicles, cars, vans, motorcycles, lorries, quad bikes, bicycles, tractors, buses, boats, caravans, tents, mobile homes, homes, hotel rooms, bedsits, flats, hotels, student halls, offices, sheds, garages, general out-buildings, personal security, panic alarm, suitcases, briefcases and cargo containers.

It will be appreciated that a device made in accordance with the present invention may have selectable profiles to adapt to different threats.

Features of a device made in accordance with the present invention may comprise:
- a small portable, self-powered, security device with no external user interface;
- control via two-way text messaging; receipt or commands (such as Arm and Disarm) via text messages from the owner; acknowledgement of such messages with a text message in reply; sending of text messages in the event of an alarm condition to the owner's mobile phone and/or to such other mobile phones as programmed by the owner; such programming being carried out via text messages; sending text messages carrying status information (including alarm status, battery status, cellular network signal level, GPS position) to the owner in response to queries also sent via text messages; possible selection of different profiles via a text message which is used to arm the unit, to adapt the unit for the protection of different types of property.

Useful features of a device made in accordance with the present invention may be summarized as:
1. the unit is portable, self-powered, has no wired connection to anything else, and no external user interface (i.e. a sealed box with no buttons and no display)
2. selectable profiles to adapt to different threats
3. two-way text messaging (not dial-up or pre-recorded voice).

Thus an embodiment of the invention may provide a fully portable, self-powered device with no external user interface, and selectable profiles to customise the unit to the particular threat to be protected against.

## Claims

1. An alarm device (10) comprising a control processor (12) connected to at least one input sensor (24, 25, 74) such that when the said at least one input sensor (24) is triggered, it sends a signal to the control processor (12), in which the alarm device (10) further comprises a cellular modem (14) connected to the control processor (12) such that upon receiving a signal from the said at least one input sensor (24), the control processor (12) issues an SMS message via the cellular modem (14), and in which the said cellular modem (14) is also able to send and receive SMS messages or data calls to and from the control processor (12), **characterised in that** the device (10) is contained in a hermetically sealed casing, with no external user interface, no charging socket, nor any other contact connections required for its operation and maintenance.

2. An alarm device (10) according to claim 1, **characterised in that** the cellular modem (14) is connected to a Subscriber Identification Module (18) (SIM).

3. An alarm device according to claim 1 or claim 2, **characterised in that** the device (10) is armable and disarmable by means of a short message service (SMS) message from a mobile telephone.

4. An alarm device (10) according to any preceding claim, **characterised in that** the control processor (12) can be programmed by means of programming instructions received in the form of an SMS message through the cellular modem (14) from a mobile telephone.

5. An alarm device (10) according to claim 4, **characterised in that** upon completing instructions contained within the received SMS, an SMS is sent back to the mobile telephone to confirm that the instructions have been carried out.

6. An alarm device (10) according to any preceding claim, **characterised in that** the device further comprises a GPS receiver (26) connected to the control processor (12) such that when an SMS message request is received via the cellular modem (14), the location of the device (10) can be transmitted via the cellular modem (14).

7. An alarm device (10) according to claim 6, **characterised in that** the alarm device (10) comprises a General Packet Radio Service (GPRS) connection such that the alarm device (10) can send information regarding its GPS position directly to a computer terminal.

8. An alarm device (10) according to claim 6 or claim 7, **characterised in that** subsequent to receiving the location request by SMS message, the location of the device (10) is transmitted at regular intervals.

9. An alarm device (10) according to any preceding claim, **characterised in that** the device further comprises a wireless interface (30) connected to the control processor (12) to forward signals it receives to the control processor (12) and transmit signals received from the control processor (12).

10. An alarm device (10) according to claim 9, **characterised in that** the wireless interface (30) transmits a signal to activate or control a secondary device (76).

11. An alarm device (10) according to any preceding claim, **characterised in that** the said at least one input sensor (24) is selected from any one of:
a wireless interface;
a motion sensor;
a tilt sensor;
a passive infrared sensor;
a laser;
an ultrasound sensor;
a temperature sensor;
a light sensor;
a sound sensor;
a pressure sensor; and
a water sensor.

12. An alarm device (10) according to claim 11, **characterised in that** the said at least one input sensor (74) is a pressure sensor which comprises a panic button.

13. An alarm device (10) according to any preceding claim, **characterised in that** the device further comprises conductance coils for charging a battery (34) of the device (10).

14. An alarm device (10) according to any preceding claim, **characterised in that** the device (10) is capable of making a voice call to a mobile telephone.

## Patentansprüche

1. Alarmeinrichtung (10), die einen Steuerprozessor (12) umfasst, der mit wenigstens einem Eingangssensor (24, 25, 74) verbunden ist, so dass, wenn der wenigstens eine Eingangssensor (24) ausgelöst wird, dieser ein Signal an den Steuerprozessor (12) sendet, wobei die Alarmeinrichtung (10) des Weiteren ein Funkmodem (14) umfasst, das mit dem Steuerprozessor (12) verbunden ist, so dass der Steuerprozessor (12) nach Empfang eines Signals von dem wenigstens einen Eingangssensor (24) eine SMS-Nachricht über das Funkmodem (14) erstellt, und wobei das Funkmodem (14) außerdem SMS-Nachrichten oder Datenanrufe an den Steuerprozessor (12) senden oder von diesem empfangen kann, **dadurch gekennzeichnet, dass** die Einrichtung (10) in einem hermetisch dichten Gehäuse ohne externe Benutzeroberfläche, Ladebuchse oder sonstige für dessen Betrieb und Wartung erforderliche Kontaktverbindungen enthalten ist.

2. Alarmeinrichtung (10) nach Anspruch 1, **dadurch gekennzeichnet, dass** das Funkmodem (14) mit einer SIM-Karte (18) verbunden ist.

3. Alarmeinrichtung (10) nach Anspruch 1 oder Anspruch 2, **dadurch gekennzeichnet, dass** die Einrichtung (10) mittels einer SMS-Nachricht von einem Mobiltelefon aktivierbar oder deaktivierbar ist.

4. Alarmeinrichtung (10) nach einem der vorstehenden Ansprüche, **dadurch gekennzeichnet, dass** der Steuerprozessor (12) mit Hilfe von Programmieranweisungen programmiert werden kann, die in Form einer SMS-Nachricht über das Funkmodem (14) von einem Mobiltelefon empfangen werden.

5. Alarmeinrichtung (10) nach Anspruch 4, **dadurch gekennzeichnet, dass** nach Ausführung der in der empfangenen SMS-Nachricht enthaltenen Anweisungen eine SMS-Nachricht zur Bestätigung, dass die Anweisungen ausgeführt wurden, an das Mobiltelefon zurückgesendet wird.

6. Alarmeinrichtung (10) nach einem der vorstehenden Ansprüche, **dadurch gekennzeichnet, dass** die Einrichtung des Weiteren einen GPS-Empfänger (26) umfasst, der mit dem Steuerprozessor (12) verbunden ist, so dass bei Empfang einer SMS-Abfrage über das Funkmodem (14) der Standort der Einrichtung (10) über das Funkmodem (14) übermittelt werden kann.

7. Alarmeinrichtung (10) nach Anspruch 6, **dadurch gekennzeichnet, dass** die Alarmeinrichtung (10) eine GPRS-Verbindung umfasst, so dass die Alarmeinrichtung (10) Informationen in Bezug auf ihre GPS-Position direkt an ein Computerendgerät senden kann.

8. Alarmeinrichtung (10) nach Anspruch 6 oder Anspruch 7, **dadurch gekennzeichnet, dass** im Anschluss an den Empfang der Standortabfrage mittels einer SMS-Nachricht der Standort der Einrichtung (10) in regelmäßigen Abständen übermittelt wird.

9. Alarmeinrichtung (10) nach einem der vorstehenden Ansprüche, **dadurch gekennzeichnet, dass** die Einrichtung des Weiteren eine mit dem Steuerprozessor (12) verbundene Funkschnittstelle (30) umfasst, um empfangene Signale an den Steuerprozessor (12) weiterzuleiten und von dem Steuerprozessor (12) empfangene Signale zu senden.

10. Alarmeinrichtung (10) nach Anspruch 9, **dadurch gekennzeichnet, dass** die Funkschnittstelle (30) ein Signal zur Aktivierung oder Steuerung eines Zweitgeräts (76) sendet.

11. Alarmeinrichtung (10) nach einem der vorstehenden Ansprüche, **dadurch gekennzeichnet, dass** der wenigstens eine Eingangssensor (24) aus Folgendem ausgewählt ist:
einer Funkschnittstelle;
einem Bewegungssensor;
einem Neigungssensor;
einem passiven Infrarotsensor;
einem Laser;
einem Ultraschallsensor;
einem Temperatursensor;
einem Lichtsensor;
einem Schallsensor;
einem Drucksensor; und
einem Wassersensor.

12. Alarmeinrichtung (10) nach Anspruch 11, **dadurch gekennzeichnet, dass** der wenigstens eine Eingangssensor (74) ein Drucksensor ist, der einen Alarmknopf umfasst.

13. Alarmeinrichtung (10) nach einem der vorstehenden Ansprüche, **dadurch gekennzeichnet, dass** die Einrichtung des Weiteren leitfähige Spulen zur Aufladung einer Batterie (34) der Einrichtung umfasst.

14. Alarmeinrichtung (10) nach einem der vorstehenden Ansprüche, **dadurch gekennzeichnet, dass** die Einrichtung (10) einen Sprachanruf an ein Mobiltelefon ausführen kann.

## Revendications

1. Dispositif d'alarme (10) comprenant un processeur de commande (12) connecté à au moins un capteur d'entrée (24, 25, 74), de telle sorte que lorsque ledit au moins un capteur d'entrée (24) est actionné, il envoie un signal au processeur de commande (12), le dispositif d'alarme (10) comprenant en outre un modem cellulaire (14) connecté au processeur de commande (12), de telle sorte que lorsqu'il reçoit un signal dudit au moins un capteur d'entrée (24), le processeur de commande (12) délivre un message SMS *via* le modem cellulaire (14), et ledit modem cellulaire (14) étant également capable d'envoyer et de recevoir des messages SMS ou des transmissions de données vers et depuis le processeur de commande (12), **caractérisé en ce que** le dispositif (10) est contenu dans un boîtier hermétiquement fermé, sans interface utilisateur externe, sans prise de rechargement ni aucune autre connexion de contact requise pour son fonctionnement et sa maintenance.

2. Dispositif d'alarme (10) selon la revendication 1, **caractérisé en ce que** le modem cellulaire (14) est connecté à un module d'identification du souscripteur (SIM) (18).

3. Dispositif d'alarme selon la revendication 1 ou la revendication 2, **caractérisé en ce que** le dispositif (10) peut être armé et désarmé au moyen d'un service de messages courts (SMS) à partir d'un téléphone mobile.

4. Dispositif d'alarme (10) selon l'une quelconque des revendications précédentes, **caractérisé en ce que** le processeur de commande (12) peut être programmé au moyen d'instructions de programmation reçues sous forme de message SMS *via* le modem cellulaire (14) à partir d'un téléphone mobile.

5. Dispositif d'alarme (10) selon la revendication 4, **caractérisé en ce que**, après exécution des instructions contenues dans le SMS reçu, un SMS est renvoyé au téléphone mobile pour confirmer que les instructions ont été exécutées.

6. Dispositif d'alarme (10) selon l'une quelconque des revendications précédentes, **caractérisé en ce que** le dispositif comprend en outre un récepteur GPS (26) connecté au processeur de commande (12), de telle sorte que, lorsqu'une demande par message SMS est reçue *via* le modem cellulaire (14), la localisation du dispositif (10) peut être transmise *via* le modem cellulaire (14).

7. Dispositif d'alarme (10) selon la revendication 6, **caractérisé en ce que** le dispositif d'alarme (10) comprend une connexion GPRS (General Packet Radio Service), de telle sorte que le dispositif d'alarme (10) puisse envoyer des informations concernant sa position GPS directement à un terminal informatique.

8. Dispositif d'alarme (10) selon la revendication 6 ou la revendication 7, **caractérisé en ce que**, après avoir reçu la demande de localisation par message SMS, la localisation du dispositif (10) est transmise à intervalles réguliers.

9. Dispositif d'alarme (10) selon l'une quelconque des revendications précédentes, **caractérisé en ce que** le dispositif comprend en outre une interface sans fil (30) connectée au processeur de commande (12) pour acheminer les signaux qu'il reçoit jusqu'au processeur de commande (12) et transmettre les signaux reçus à partir du processeur de commande (12).

10. Dispositif d'alarme (10) selon la revendication 9, **caractérisé en ce que** l'interface sans fil (30) transmet un signal pour activer ou commander un dispositif secondaire (76).

11. Dispositif d'alarme (10) selon l'une quelconque des revendications précédentes, **caractérisé en ce que** ledit au moins un capteur d'entrée (24) est choisi parmi un élément quelconque suivant, à savoir :
une interface sans fil ;
un capteur de mouvement ;
un capteur d'inclinaison ;
un capteur infrarouge passif
un laser ;
un capteur d'ultrasons ;
un capteur de températures ;
un capteur de lumière ;
un capteur de sons ;
un capteur de pression ; et
un capteur d'eau.

12. Dispositif d'alarme (10) selon la revendication 11, **caractérisé en ce que** ledit au moins un capteur d'entrée (74) est un capteur de pression qui comprend un bouton panique.

13. Dispositif d'alarme (10) selon l'une quelconque des revendications précédentes, **caractérisé en ce que** le dispositif comprend en outre des bobines à conductance pour charger la batterie (34) du dispositif (10).

14. Dispositif d'alarme (10) selon l'une quelconque des revendications précédentes, **caractérisé en ce que** le dispositif (10) est capable d'effectuer un appel vocal vers un téléphone mobile.
